(19) Europäisches Patentamt
European Patent Office
Office européen des brevets

(11) **EP 4 375 025 B1**

(12) **FASCICULE DE BREVET EUROPEEN**

(45) Date de publication et mention
de la délivrance du brevet:
**22.04.2026 Bulletin 2026/17**

(21) Numéro de dépôt: **23208176.0**

(22) Date de dépôt: **07.11.2023**

(51) Classification Internationale des Brevets (IPC):
**B25J 9/16** (2006.01)   **B23P 19/00** (2006.01)
**B23P 19/02** (2006.01)   **B23P 19/04** (2006.01)
**G05B 19/418** (2006.01)

(52) Classification Coopérative des Brevets (CPC):
**B25J 9/1682; B23P 19/007; B23P 19/02;**
**B23P 19/04; B25J 9/1674; B25J 9/1687;**
**G05B 19/41805;** G05B 2219/37319;
G05B 2219/37632; G05B 2219/39084;
G05B 2219/39219; G05B 2219/40053;
G05B 2219/40332; G05B 2219/40556;
G05B 2219/45064;                          (Cont.)

(54) **PROCÉDÉ D' ASSEMBLAGE DE PIÈCES EN VRAC**

VERFAHREN ZUM VERBINDEN VON SCHÜTTGUTTEILEN

METHOD FOR JOINING BULK MATERIAL

(84) Etats contractants désignés:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priorité:  **28.11.2022  FR 2212432**

(43) Date de publication de la demande:
**29.05.2024 Bulletin 2024/22**

(73) Titulaire: **Thyssenkrupp System Engineering**
**S.a.s.**
**68190 Ensisheim (FR)**

(72) Inventeurs:
• **SALAUN, Anthony**
**68000 Colmar (FR)**
• **BASSO, Guillaume**
**68440 Habsheim (FR)**
• **CAUSSE, Mickaël**
**38440 Habsheim (FR)**

(74) Mandataire: **Germain Maureau**
**12, rue Boileau**
**69006 Lyon (FR)**

(56) Documents cités:
DE-A1- 102018 003 269    US-A1- 2017 368 648
US-A1- 2021 394 367

• ZHU ZUYUAN ET AL: "Robot Performing Peg-in-
Hole Operations by Learning from Human
Demonstration", 2018 10TH COMPUTER
SCIENCE AND ELECTRONIC ENGINEERING
(CEEC), IEEE, 19 September 2018 (2018-09-19),
pages 30 - 35, XP033533353, DOI: 10.1109/
CEEC.2018.8674203

(52) Classification Coopérative des Brevets (CPC):
(Cont.)G05B 2219/50073

(52) Classification Coopérative des Brevets (CPC):
(Cont.)G05B 2219/50073

**Description**

DOMAINE TECHNIQUE GÉNÉRAL

La présente invention concerne le domaine de la robotisation de processus industriels et notamment de chaines de fabrication. La présente invention concerne plus précisément un procédé d'assemblage avec une composante de dévracage, c'est-à-dire de préhension de pièces disposées en vrac dans un contenant tout en les assemblant directement.

ETAT DE L'ART

Les pièces destinées à être utilisées dans des chaînes de fabrication sont généralement fournies « en vrac », c'est-à-dire disposées de manière non ordonnée dans un contenant, par opposition à un conditionnement « unitaire » dans lequel chaque pièce est rangée individuellement.

Le dévracage (en anglais bin picking) est la tâche hautement répétitive et sans valeur ajoutée consistant à les saisir une à une pour les disposer ailleurs et les utiliser ensuite.

On a récemment cherché à automatiser cette tâche, notamment en utilisant des robots disposant d'une capacité de vision et de moyens de préhension. Plus précisément, un bras robot vient saisir une à une les pièces dans le contenant. La difficulté est que le contenant peut rassembler plusieurs centaines ou milliers de pièces pouvant être enchevêtrées et se chevauchant c'est pourquoi il est nécessaire d'utiliser un algorithme avancé de localisation de pièces disposées en vrac, tel que décrit dans la demande FR2204180.

Cette technique de dévracage apporte entière satisfaction mais ne permet aujourd'hui que d'attraper une pièce pour la poser quelque part, généralement une zone tampon. Si l'on souhaite assembler cette pièce avec une autre, et notamment en emmancher une dans l'autre, il est nécessaire d'utiliser un autre robot dédié, généralement une presse appliquant une force sur les pièces, d'où une perte de temps.

En effet, les bras robot utilisés pour le dévracage mettent en oeuvre un mécanisme d'anticollision qui permet d'arrêter le mouvement automatiquement si un actionneur détecte une force de résistance supérieure à un seuil (caractéristique d'un contact), de sorte qu'il est impossible d'envisager appliquer un effort avec le bras, d'où le recours à des presses dédiées. Or, ce mécanisme d'anticollision est indispensable pour des questions de sécurité, car il faut pouvoir interrompre le mouvement du robot en cas d'obstacle imprévu sur le trajet du bras.

Au mieux il a été proposé que le bras robot change de mors (mors de précision → mors de pressage) après avoir posé la pièce sur la zone tampon, voire présente directement un outil presse non soumis à l'anticollision, pour effectuer l'effort, ce qui complexifie la tâche sans vraiment l'accélérer.

On connait des documents Zuyuan Zhu et al. Robot Performing Peg-in-Hole Operations by Learning from Human Demonstration, US2017368648, DE102018003269 et US2021394367 de tels procédés d'assemblage de pièces par robot.

La présente invention vient améliorer la situation.

PRÉSENTATION DE L'INVENTION

La présente invention se rapporte donc selon un premier aspect à un procédé d'assemblage d'au moins une première pièce avec une deuxième pièce, la première pièce étant disposée en vrac dans un premier contenant, le procédé étant caractérisé en ce qu'il comprend la mise en œuvre par des moyens de traitement de données d'étapes de :

(c) Détermination d'une première trajectoire d'un premier robot muni d'articulations actionnées et d'un organe de préhension, permettant de saisir ladite première pièce dans le premier contenant avec l'organe de préhension du premier robot puis de la déplacer jusqu'à l'assembler avec la seconde pièce, ladite seconde pièce étant tenue par un organe de préhension d'un deuxième robot différent du premier robot dans une position d'attente prédéfinie ;

(d) Commande du premier robot de sorte à mettre en œuvre ladite trajectoire, en estimant un effort subi par lesdites articulations actionnées du premier robot en fonction de l'avancement de la trajectoire ;

(e) Vérification que pendant la trajectoire :

- Jusqu'à un contact de la première pièce avec la deuxième pièce (2b), l'effort subi est inférieur à un seuil de sécurité ;
- ensuite, une variation de l'effort subi est conforme à une variation attendue représentative de l'assemblage de la première pièce avec la deuxième pièce.

Selon des caractéristiques avantageuses et non-limitatives :

La deuxième pièce est également disposée en vrac dans un deuxième contenant, le procédé comprenant des étapes préalables de :

(a) Détermination d'une deuxième trajectoire d'un troisième robot muni d'articulations actionnées et d'un organe de préhension permettant de saisir ladite deuxième pièce dans le deuxième contenant avec l'organe de préhension du troisième robot et de la déplacer jusqu'à ladite position d'attente ;
(b) Commande du troisième robot de sorte à mettre en œuvre ladite deuxième trajectoire.

Le troisième robot est le deuxième robot.

Le troisième robot n'est pas le deuxième robot, préférentiellement est le premier robot, et l'étape (b) comprend le transfert de ladite deuxième pièce de l'organe de préhension du troisième robot à l'organe de préhension du deuxième robot.

L'étape (c) comprend la localisation préalable de ladite première pièce dans le premier contenant en fonction d'au moins un nuage de points tridimensionnel des pièces disposées en vrac dans le premier contenant, acquis par une caméra stéréoscopique.

La première trajectoire du premier robot comprend successivement :

-   Une phase initiale, dans laquelle le premier robot se déplace d'une position de départ jusqu'à une position de préhension dans laquelle l'organe de préhension du premier robot peut saisir la première pièce ;
-   Une phase d'approche, dans laquelle le premier robot se déplace, en tenant la première pièce, de la position de préhension jusqu'à la position de contact de la première pièce avec la deuxième pièce ;
-   Une phase d'emmanchement de la première pièce avec la deuxième pièce.

La phase d'emmanchement comprend une première sous-partie de glissement une deuxième sous-partie d'assemblage, l'étape (e) comprenant la vérification que :

-   sur la sous-phase de glissement, une montée de l'effort subi est au-delà d'un seuil minimal mais sans atteindre un seuil intermédiaire ;
-   Sur la sous-phase d'assemblage, un seuil maximal supérieur au seuil intermédiaire est atteint dans un intervalle prédéterminé de position d'avancement du premier robot.

La phase d'emmanchement comprend une première sous-phase de glissement jusqu'à une position de dépose dans laquelle l'organe de préhension du premier robot peut lâcher la première pièce, et une deuxième sous-phase d'assemblage en appliquant sur la première pièce une poussée avec une surface d'appui du premier robot.

L'étape (e) comprend:

-   Si, avant le contact de la première pièce avec la deuxième pièce, l'effort subi atteint ledit seuil de sécurité, chaque robot est arrêté;
-   Si, après le contact de la première pièce avec la deuxième pièce, la variation de l'effort subi n'est conforme à la variation attendue représentative de l'assemblage de la première pièce avec la deuxième pièce, le résultat de l'assemblage est rejeté

Le procédé comprend des étapes supplémentaires de :

(f) Détermination d'une troisième trajectoire du premier robot permettant de déposer le résultat de l'assemblage jusqu'à un autre contenant selon le résultat de la vérification de l'étape (e) ;
(g) Commande du premier robot de sorte à mettre en œuvre ladite troisième trajectoire.

Selon un deuxième aspect, l'invention concerne un système d'assemblage d'au moins une première pièce avec une deuxième pièce, la première pièce étant disposée en vrac dans un premier contenant, comprenant un premier robot muni d'articulations actionnées et d'un organe de préhension, un deuxième robot différent du premier robot muni un organe de préhension, et des moyens de traitement de données ; caractérisé en ce que les moyens de traitement de données sont configurés pour :

-   déterminer une première trajectoire du premier robot permettant de saisir ladite première pièce dans le premier contenant avec l'organe de préhension du premier robot puis de la déplacer jusqu'à l'assembler avec la seconde pièce, lorsque ladite seconde pièce est tenue par l'organe de préhension du deuxième robot dans une position d'attente prédéfinie ;

- Commander le premier robot de sorte à mettre en œuvre ladite trajectoire, en estimant un effort subi par lesdites articulations actionnées du premier robot en fonction de l'avancement de la trajectoire ;
- Vérifier que pendant la trajectoire :

  o Jusqu'à un contact de la première pièce avec la deuxième pièce, l'effort subi est inférieur à un seuil de sécurité ;
  o ensuite, une variation de l'effort subi est conforme à une variation attendue représentative de l'assemblage de la première pièce avec la deuxième pièce.

Selon des caractéristiques avantageuses et non-limitatives, le système comprend un troisième robot muni d'articulations actionnées et d'un organe de préhension, la deuxième pièce étant disposée en vrac dans un deuxième contenant (3b) ; les moyens de traitement de données sont configurés pour :

- déterminer une deuxième trajectoire du troisième robot permettant de saisir ladite deuxième pièce dans le deuxième contenant avec l'organe de préhension du troisième robot et de la déplacer jusqu'à ladite position d'attente ;
- Commander le troisième robot de sorte à mettre en œuvre ladite deuxième trajectoire.

Selon un deuxième et un troisième aspect, sont proposés un produit programme d'ordinateur comprenant des instructions de code pour l'exécution d'un procédé selon le premier d'assemblage d'au moins une première pièce avec une deuxième pièce, et un moyen de stockage lisible par un équipement informatique sur lequel est enregistré un produit programme d'ordinateur comprenant des instructions de code pour l'exécution d'un procédé selon le premier aspect d'assemblage d'au moins une première pièce avec une deuxième pièce.

PRÉSENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :

[Fig. 1] la figure 1 est un schéma d'un système pour la mise en œuvre du procédé selon l'invention ;
[Fig. 2]la figure 2 est un logigramme représentant les étapes d'un mode de réalisation du procédé selon l'invention ;
[Fig. 3a]la figure 3a illustre un premier état du système dans un mode de réalisation du procédé selon l'invention ;
[Fig. 3b]la figure 3b illustre un deuxième état du système dans un mode de réalisation du procédé selon l'invention ;
[Fig. 3c]la figure 3c illustre un troisième état du système dans un mode de réalisation du procédé selon l'invention ;
[Fig. 4a]la figure 4a représente un premier exemple de courbe effort/déplacement utilisée dans un mode de réalisation de procédé selon l'invention ;
[Fig. 4b]la figure 4b représente un deuxième exemple de courbe effort/déplacement utilisée dans un mode de réalisation de procédé selon l'invention.

DESCRIPTION DÉTAILLÉE

*Architecture*

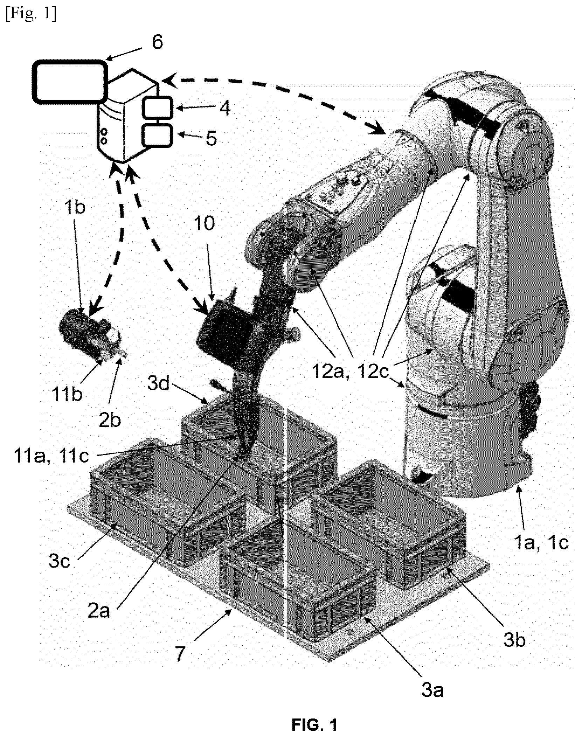

En référence à la **figure 1,** la présente invention concerne un procédé d'assemblage d'au moins une première pièce 2a avec une deuxième pièce 2b, la première pièce 2a étant disposée en vrac dans un premier contenant 3a (ce qui signifie qu'il y a une pluralité d'exemplaires de la première pièce 2a dans ledit premier contenant 3a), et avantageusement la deuxième pièce 2b est également disposée en vrac dans un deuxième contenant 3b (ce qui signifie qu'il y a une pluralité d'exemplaires de la deuxième pièce 2b dans ledit deuxième contenant 3b), même s'il est possible que la deuxième pièce 3b soit déjà conditionnée de manière ordonnée. On rappelle que par disposé « en vrac » on entend disposées de manière non ordonnée et généralement aléatoire : à l'ouverture des contenants, la position des pièces à l'intérieur et leur enchevêtrement est imprévisible.

Les premier et deuxième contenants (ou conteneurs) 3a, 3b sont typiquement des caisses, ouvertes de sorte à accéder aux pièces à l'intérieur et les saisir individuellement. A noter qu'il est possible que les premier et deuxième contenants 3a, 3b soient confondus, i.e. que les première et deuxième pièces 2a, 2b sont disposées en vrac dans un même contenant. Dans l'exemple de la figure 1 on a 4 contenants : le premier contenant 2a, le deuxième contenant 3b, un troisième contenant 3c pour réceptionner les pièces assemblées, et un quatrième contenant 3d pour réceptionner les pièces rejetées (voir plus loin).

On comprend que le procédé comprend ainsi à la fois une composante de dévracage (d'au moins la première pièce 2a), et une composante d'assemblage, les deux étant faites simultanément, sans passer par une phase de repositionnement des pièces dévraquées.

Par assemblage, on entend l'union des deux pièces 2a, 2b de sorte à former une seule pièce noté 2a+2b. On suppose dans la suite de la description que les pièces 2a, 2b sont assemblables, c'est-à-dire qu'elle présentent des formes complémentaires. Les pièces 2a, 2b pourraient elles aussi être identiques, sous réserve de leur possible assemblage.

On a généralement une pièce « male », i.e. avec une protubérance (dans les exemples représentés, c'est la première pièce 2a, un axe) et une pièce « femelle », i.e. un alésage (dans les exemples représentés, c'est la deuxième pièce 2b, un barillet), et l'assemblage est un engagement de la pièce male dans la pièce femelle (plus précisément de la protubérance dans l'alésage), ou « emmanchement ». L'assemblage peut être en force, et tenir par friction, ou impliquer une déformation élastique, un clipsage, etc.

Le système pour la mise en œuvre du présent procédé comprend des moyens de traitement de données 4 et au moins deux robots 1a, 1b (et potentiellement trois). Dans l'exemple de la figure 1, il n'y a que le premier robot 1a et le deuxième robot 1b. On utilisera la référence 1c pour l'éventuel troisième robot, mais on comprend que dans les exemples représentés le premier robot 1a joue le rôle du troisième robot. Alternativement, le deuxième robot 1b peut jouer le rôle du troisième robot 1c, on expliquera plus loin toutes les configurations possibles.

Les moyens de traitement de données 4 sont typiquement un processeur, et sont en particulier destinés à contrôler les robots 1a, 1b, 1c. Il s'agit généralement des moyens de traitement de données d'un ordinateur, tel qu'un PC portable, connecté aux robots 1a, 1b, 1c, lequel peut en outre comprendre. Le système comprend en outre typiquement des moyens de stockage de données 5 (une mémoire, à nouveau potentiellement celle du PC), une interface 6 (par exemple un écran tactile), et une structure 7 de support des robots 1a, 1b, 1c présentant en particulier un plateau de posage des contenants 3a, 3b, 3c, 3d et sur laquelle peut être montée l'interface 7.

Le système comprend en outre avantageusement une caméra stéréoscopique 10, également connectée aux moyens de traitement 4. La caméra 10 est disposée de sorte à voir l'intérieur des contenants et donc les pièces 2a, 2b, i.e. soit de manière fixe, soit montée sur le premier robot 1a (cas de la figure 1), et dans tous les cas apte à acquérir un nuage de points tridimensionnel, et généralement une image bidimensionnelle. Dans le cas d'un troisième robot 1c distinct du premier robot 1a (voir plus loin), il peut avoir sa propre caméra 10.

*Robots*

Le premier robot 1a est un robot de manipulation d'au moins la première pièce 2a. Il est muni d'articulations actionnées 12a et d'un organe de préhension 11a, et avantageusement d'une surface d'appui 13a (voir plus loin).

On appelle généralement « bras robot » un tel robot, car les articulations actionnées 12a, ou « joints » lui permettent de changer de position et ainsi de déplacer une pièce 2a. Dans l'exemple de la figure 1, le premier robot est de type Staübli TX2-90L à 6 articulations actionnées 12a, mais tout autre architecture sera possible, y compris des robots cartésiens, car la notion d'articulations actionnées sera interprétée largement.

L'organe de préhension 11a est typiquement une pince 2 mors, actionnable indépendamment des articulations, de sorte à « saisir » ou « lâcher » une pièce 2a, et située généralement à l'extrémité du bras de sorte que toutes les articulations 12a concourent à déplacer cet organe de préhension 11a. La caméra 10 est typiquement également à l'extrémité du bras, de sorte à bouger de manière solidaire de l'organe de préhension 11a.

Par commodité, dans la suite de la description, on désignera comme « position » du premier robot 1a la valeur du vecteur des positions de chaque articulation, noté [j1, j2, j3, j4, j5, j6] dans le cas du robot 6-axes. On suppose qu'on dispose d'un modèle dynamique du robot permettant de mettre en concordance une position spatiale [X, Y, Z] (dans un repère donné - en particulier orthonormé) de l'organe de préhension 11a avec une position [j1, j2, j3, j4, j5, j6] du robot 1a.

On suppose que le premier robot 1a implémente un mécanisme classique d'anticollision, i.e. qu'il est capable d'estimer un effort subi par lesdites articulations actionnées lors d'une trajectoire, pour en particulier détecter un effort anormal représentatif d'un impact contre un obstacle (effort supérieur à un seuil de sécurité) : le premier robot s'arrête alors instantanément.

Le deuxième robot 1b quant à lui n'a pas nécessairement d'articulations actionnées 12b, mais a son organe de préhension 11b pour saisir/lâcher la deuxième pièce 2b. Dans les exemples représentés, il s'agit d'une pince 3 mors. On suppose qu'est prédéfinie pour le deuxième robot 2b une position d'attente, qui est fixe en l'absence d'articulations actionnées 11b.

Alternativement, le deuxième robot 2b peut être un bras robot complet (i.e. avec articulations actionnées 12b), par exemple le même que le premier robot 1a (non représenté). Il peut alors avoir sa propre caméra stéréoscopique.

A noter que les premier et deuxièmes robots 1a, 1b sont deux robots distincts (en ce qu'ils sont manipulables indépendamment de sorte que le premier robot 1a puisse tenir et déplacer la première pièce 2a par rapport au deuxième robot 1b, i.e. qu'ils aient des articulations actionnées et des organes de préhension 11a, 11b différents), mais ils peuvent « faire partie » d'un même grand robot.

Comme expliqué le présent procédé implique en particulier au moins le dévracage de la première pièce 2a par le premier robot 2a. Dans le cas où il implique également le dévracage de la deuxième pièce 2b, ce devracage est fait par une troisième robot 1c.

Selon un premier mode de réalisation, on a un troisième robot 1c distinct des deux autres robots 1a, 1b qui est typiquement le même modèle que le premier robot 1a (un bras robot à articulation actionnées et organe de préhension). Le troisième robot 1c dévraque la deuxième pièce 2b et la donne au deuxième robot 1b (qui peut être un robot sans articulation actionnée), et le premier robot 1b dévraque la première pièce 2a et met en œuvre l'assemblage, les deux peuvent dévraquer en simultané.

Selon un deuxième mode de réalisation, le troisième robot 1c est le deuxième robot 1b, i.e. le deuxième robot 1b joue également le rôle du troisième robot et dévraque la deuxième pièce 2b. Il est alors typiquement le même modèle que le premier robot 1a (un bras robot à articulation actionnées et organe de préhension). Le deuxième robot 1b dévraque la deuxième pièce 2b et se place à la position d'attente, puis le premier robot 1b dévraque la première pièce 2a et met en œuvre l'assemblage.

Selon un troisième mode de réalisation correspondant à ce qui est représenté par la figure 1, le troisième robot 1c est le premier robot 1a, i.e. le premier robot 1a joue également le rôle du troisième robot et dévraque la deuxième pièce 2b. En d'autres termes le même bras dévraque les deux pièces 2a, 2b. Le premier robot 1a dévraque la deuxième pièce 2b et la donne au deuxième robot 1b (qui peut être un robot sans articulation actionnée), puis le premier robot 1b dévraque la première pièce 2a et met en œuvre l'assemblage. Le deux dévracages sont alors nécessairement séquentiels.

*Principe*

Le premier robot 1a qui a des articulation actionnées 12a doit mettre en œuvre un mécanisme d'anticollision par sécurité, qui s'avère incompatible avec l'assemblage qui est par définition une collision.

Le présent procédé propose non pas de s'opposer à l'anticollision, mais de l'utiliser d'une façon originale et complètement contre-intuitive, qui non seulement permet l'assemblage, mais permet de s'assurer qu'il se passe correctement, et ce sans sacrifier la sécurité.

L'idée est de toujours monitorer l'effort subi par les articulations actionnées 12a du premier robot 2a, mais à partir d'un contact de la première pièce 2a avec la deuxième pièce 2b, de vérifier qu'une variation de l'effort subi est conforme à une variation attendue représentative de l'assemblage de la première pièce 2a) avec la deuxième pièce 2b.

Plus précisément, jusqu'audit contact de la première pièce 2a avec la deuxième pièce 2b, on vérifie en « anticollision classique » que l'effort subi est en permanence inférieur à un seuil de sécurité, puis lorsque le contact commence (ce qui peut être établi en fonction de la position du premier robot 1, puisqu'on sait que ce contact et à ladite position d'attente), on compare le profil d'effort avec un profil d'effort attendu qui permet de s'assurer que :

- La hausse d'effort constatée est bien normale (due à l'emmanchement) et donc un impact avec un obstacle ; et que
- L'assemblage est « bon » et donc que la pièce 2a+2b est correcte, sinon c'est que l'assemblage s'est mal passé (éventuellement du fait d'un défaut d'une des pièces) et la « pseudo » pièce 2a+2b est rejetée.

*Procédé*

On peut partir d'un état dans lequel la seconde pièce étant tenue par l'organe de préhension 13b du deuxième robot 10b dans la position d'attente prédéfinie, si la deuxième pièce 1b n'est pas disposée en vrac, voire même si un opérateur donne manuellement la deuxième pièce 2b au deuxième robot 1b.

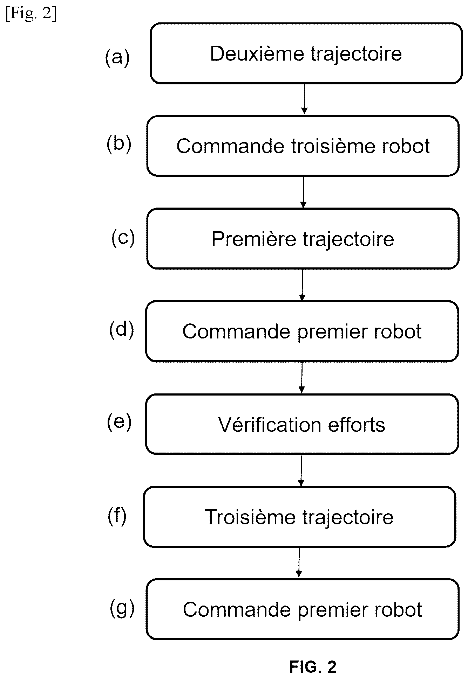

Alternativement, en référence à la **figure 2,** le procédé commence par des étapes optionnelles (a) de détermination d'une deuxième trajectoire du troisième robot 1c permettant de saisir ladite deuxième pièce 2b dans le deuxième contenant 3b organe de préhension 13c du troisième robot 1c et de la déplacer jusqu'à ladite position d'attente ; et (b) de commande du troisième robot 1c de sorte à mettre en œuvre ladite deuxième trajectoire (préférentiellement en estimant un effort subi par lesdites articulations actionnées 12c du troisième robot 2c en fonction de l'avancement de la trajectoire).

La deuxième trajectoire du troisième robot 1c comprend avantageusement successivement :

- Une phase initiale, dans laquelle le troisième robot 1c se déplace d'une position de départ jusqu'à une position de préhension dans laquelle l'organe de préhension 11c du premier robot 1c peut saisir la deuxième pièce 2b (dans le deuxième contenant 3b) ; et
- Une phase d'approche, dans laquelle le troisième robot 1c se déplace, en tenant la deuxième pièce 2b, de la position de préhension jusqu'à la position d'attente.

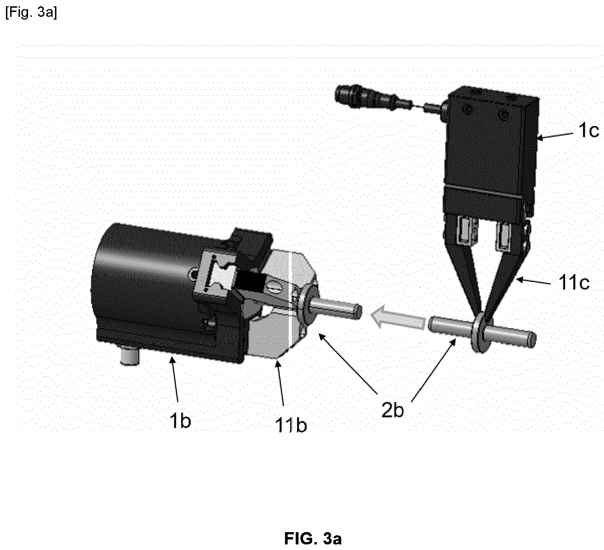

L'étape (b) comprend alors le cas échéant (si le troisième robot 1c est différent du deuxième robot 1b, et en particulier si c'est le premier robot 1a comme dans les exemples représentés), le transfert de ladite deuxième pièce 2b de l'organe de préhension 11c du troisième robot 1c à l'organe de préhension 11b du deuxième robot 1b, comme l'on voit à la **figure 3a.** Ledit transfert est statique : arrivé dans la position d'attente, l'organe de préhension 11b du deuxième robot 1b saisit la deuxième pièce 2b, puis l'organe de préhension 11c du troisième robot 1c lâche la deuxième pièce 2b (pendant un bref instant les deux tiennent à la fois la deuxième pièce 2b). Le troisième robot 1c change alors de position pour libérer l'espace devant la deuxième pièce 2b (par exemple retourner à ladite position de départ).

Ensuite, le procédé comprend des étapes principales (c) de détermination d'une première trajectoire du premier robot 1a permettant de saisir ladite première pièce 2a dans le premier contenant 3a avec l'organe de préhension 13a du premier robot 1c et de la déplacer jusqu'à l'assembler avec la seconde pièce 2b (voir plus loin) ; et (d) de commande du premier robot 1a de sorte à mettre en œuvre ladite deuxième trajectoire.

A l'instar de la deuxième trajectoire, la première trajectoire du premier robot 1a comprend avantageusement successivement :

- Une phase initiale, dans laquelle le premier robot 1a se déplace d'une position de départ (qui peut être la position d'attente pour gagner du temps si le troisième robot 1c est le premier robot 1a - on peut alternativement revenir à la position de départ) jusqu'à une position de préhension dans laquelle l'organe de préhension 11a du premier robot 1a peut saisir la première pièce 2a (dans le premier contenant 3a) ;
- Une phase d'approche, dans laquelle le premier robot 1a se déplace, en tenant la première pièce 2a, de la position de préhension jusqu'à une position de contact de la première pièce 2a avec la deuxième pièce ;
- Une phase d'emmanchement de la première pièce 2a avec la deuxième pièce 2b. Cette dernière comprend de manière visible ou pas deux sous-phases de glissement (i.e. début de l'emmanchement, réversible, avec une résistance qui reste limitée) et d'assemblage (i.e. fin de l'emmanchement, irréversible, jusqu'à ce que les pièces soient effectivement assemblées et qui implique de vaincre une forte résistance). Ces deux sous-phases peut être faites soit d'une seule traite, i.e. au moyen du seul organe de préhension 11a du premier robot 1a (on parle d'emmanchement direct), si l'organe de préhension 11a du premier robot 1a est suffisamment robuste, soit être séparées si l'organe de préhension 11a est trop fragile ou si l'on ne veut pas risquer de le dérégler (il doit rester très précis). Dans ce second cas, d'emmanchement indirect, la sous-phase de glissement est mise en œuvre avec l'organe de préhension 11a du premier robot 1a et la sous-phase d'assemblage est mise en œuvre avec la surface d'appui 13a du premier robot 1a. Plus précisément :

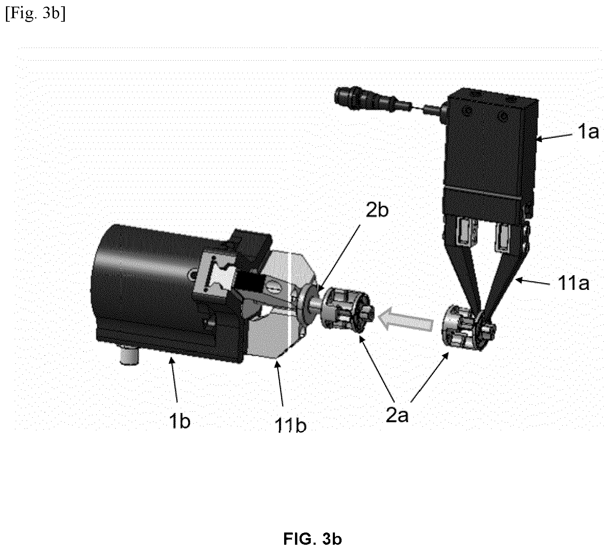

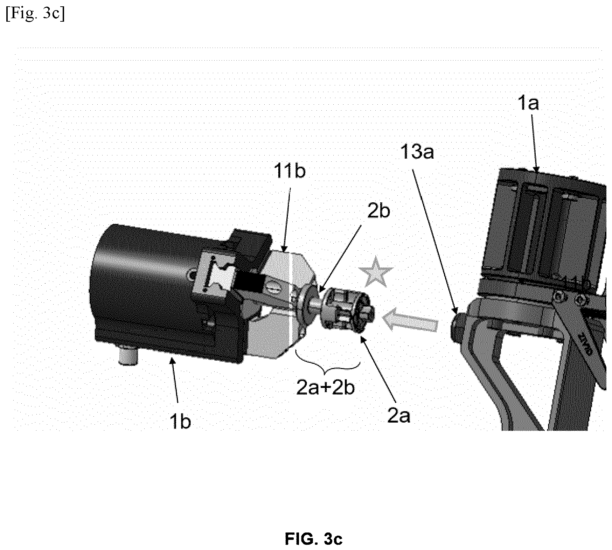

  o Le glissement est jusqu'à une position de dépose dans laquelle l'organe de préhension 11a du premier robot 1a peut lâcher la première pièce 2a (représentée par la **figure 3b**), en effet elle tient sur la deuxième pièce 2a bien que de façon non sécurisée ;
  o L'assemblage est obtenu en appliquant sur la première pièce une poussée avec la surface d'appui 13a du premier robot 1a (représentée par la **figure 3c**). Pour reformuler, le premier robot 1a peut s'écarter de la première pièce 2a et pivoter de sorte à revenir à son contact non pas avec l'organe de préhension 11a mais avec une surface d'appui 13a (un organe rigide généralement à proximité immédiate de l'organe de préhension 11 a à l'extrémité du bras robot 1a) qui elle peut appliquer une force bien plus élevée.

A part éventuellement de la dernière phase d'emmanchement qui a des contraintes particulières qui seront décrites en détail, les étapes (c) et (d) sont respectivement similaires avec les éventuelles étapes (a) et (b), et sont de façon générales connues de l'homme du métier, qui pourra se référer en particulier à la demande FR2204180 :

- l'étape (c) peut comprendre la localisation préalable de ladite première pièce 2a dans le premier contenant 3a en fonction d'au moins un nuage de points tridimensionnel des pièces disposées en vrac dans le premier contenant 2a, acquis par la caméra stéréoscopique 10 (et similairement l'étape (a) peut comprendre la localisation préalable de ladite deuxième pièce 2b dans le deuxième contenant 3b en fonction d'au moins un nuage de points tridimensionnel des pièces disposées en vrac dans le deuxième contenant 2b, acquis par la caméra stéréoscopique 10)
- la première trajectoire (tout comme la deuxième trajectoire) peut être déterminée par un algorithme de planification, connaissant les positions de passage exigées, et une géométrie des pièces 2a, 2b définissant une direction d'emmanchement ;
- L'exécution d'une trajectoire se fait avec un contrôleur adéquat des articulations actionnées 12a, 12b, 12c des robots 1a, 1b, 1c.

Dans une étape (e) très originale (qui peut en pratique être mise en œuvre en temps réel simultanément avec les exécutions de trajectoires des étapes (b) et (d), les moyens de traitement de données 4 vérifient que pendant la trajectoire :

- Jusqu'au contact de la première pièce 2a avec la deuxième pièce 2b, l'effort subi est inférieur à un seuil de sécurité (par exemple 30N - il s'agit de l'anticollision classique) - ce qui correspond à toute la deuxième trajectoire, et les phases initiales et d'approche de la première trajectoire ;

- Ensuite - ce qui correspond à la phase d'emmanchement de la première trajectoire - une variation de l'effort subi est conforme à une variation attendue représentative de l'assemblage de la première pièce 2a avec la deuxième pièce 2b.

Si :

- avant le contact de la première pièce 2a avec la deuxième pièce 2b, l'effort subi atteint ledit seuil de sécurité, le premier robot 1a (ou le troisième robot 1c si l'on est à l'étape (b), et préférentiellement chaque robot) est arrêté ;
- après le contact de la première pièce 2a avec la deuxième pièce 2b :

   o la variation de l'effort subi n'est conforme à la variation attendue représentative de l'assemblage de la première pièce 2a avec la deuxième pièce 2b, on peut supposer que l'assemblage s'est mal passé et le résultat de l'assemblage est rejeté (un des robots 1a, 1b, 1c peut la mettre dans le quatrième contenant 3d). Comme on verra plus loin il peut y avoir plusieurs cas de rejet.
   ○ la variation de l'effort subi est conforme à la variation attendue représentative de l'assemblage de la première pièce 2a avec la deuxième pièce 2b, on peut supposer que l'assemblage s'est bien passé et le résultat de l'assemblage (pièce 2a+2b) est accepté (un des robots 1a, 1b, 1c peut la mettre dans le troisième contenant 3c).

Par « contact de la première pièce 2a avec la deuxième pièce 2b » on entend un instant ponctuel théorique (le contact dure en pratique toute la phase d'emmanchement), qui n'a pas besoin d'être détecté car :

- on connait la position d'attente (qui est prédéterminée) et la géométrie des pièces 2a, 2b, donc on peut déterminer ladite position de contact ;
- on connait en temps réel la position du premier robot 1a, donc les moyens de traitement 4 peuvent supposer que le contact a lieu lorsque la position de contact est atteinte.

Ainsi, tant qu'on n'a pas atteint la position de contact, on est en mode « effort subi est inférieur à un seuil de sécurité » et ensuite on passe en mode « variation de l'effort subi est conforme à une variation attendue représentative de l'assemblage ».

Mathématiquement, ledit effort subi par lesdites articulations actionnées 12a, 12c en fonction de l'avancement de la trajectoire peut être fonction des différences, pour chaque articulation actionnée 12a, 12c, entre un couple de référence prévisible (dû au poids du bras robot, à l'inertie, etc.) et un couple effectivement mesuré pour l'articulation (on sait mesurer un tel couple en fonction du courant électrique observé dans l'actionneur).

On peut noter $EffortSubi = d(EffortRef, EffortMes)$, avec $d$ une fonction de distance (typiquement norme 1, norme 2 ou norme infini), $EffortRef = [CoupleRef_i]_{1 \le i \le n}$ et $EffortMes = [CoupleMes_i]_{1 \le i \le n}$ les efforts de référence et mesurés et n le nombre d'articulations (6 dans l'exemple du bras Staübli).

Si d est la norme 2 on a $EffortSubi = \sum_{i=1}^{n} |CoupleRef_i - CoupleMes_i|$, $d$ si est la norme 2 on a

$$EffortSubi = \sqrt{\sum_{i=1}^{n}(CoupleRef_i - CoupleMes_i)}$$ et si d est la norme infini on a

$$EffortSubi = \max_{1 \le i \le n}(|CoupleRef_i - CoupleMes_i|)$$

On comprend qu'en l'absence de collision, $EffortSubi$ devrait être quasiment nul, de sorte qu'on peut prévoir un seuil de sécurité bas, par exemple 30N, dix voire 100 fois plus faible que l'effort nécessaire pour l'emmanchement (comme l'on verra on peut monter à plus de 7500N).

Par variation de l'effort subi, on entend un profil d'effort en fonction de l'avancement de la trajectoire, i.e. du temps ou de la position du premier robot 1a au cours de l'emmanchement. Généralement, l'emmanchement est selon une direction constante (translation), de sorte qu'on peut exprimer l'effort subi en fonction d'une côte d'emmanchement selon la direction d'emmanchement.

La vérification que la variation de l'effort subi est conforme à une variation attendue représentative de l'assemblage de la première pièce 2a avec la deuxième pièce 2b peut être réalisée par toute technique, y compris la mise en œuvre de modèle IA de classification, appris sur une base de variations attendues représentative de l'assemblage de la première pièce 2a avec la deuxième pièce 2b (en tant qu'exemples d'apprentissage).

Alternativement, on vérifie certains critères, de manière préférée que :

- sur la sous-phase de glissement, une montée de l'effort subi est au-delà d'un seuil minimal (typiquement au moins 20 fois le seuil de sécurité) mais sans atteindre un seuil intermédiaire (typiquement 3 ou 4 fois le seuil minimal). En effet, lors du glissement l'effort monte progressivement. Si on n'atteint pas le seuil minimal, c'est que l'ajustement des pièces est trop lâche est que l'assemblage sera impossible, et si on atteint le seuil intermédiaire, c'est qu'il y a un déjà blocage ou un obstacle (on rappelle qu'on n'a pas encore commencé la poussée avec la surface d'appui 13a). On peut vérifier aussi que l'effort croit sensiblement linéaire durant le glissement (car il y a de plus en plus de matière engagée), par exemple en vérifiant que la dérivée est dans un intervalle donné.

- Sur la sous-phase d'assemblage, l'atteinte d'un seuil maximal (qui témoigne de l'arrivée de la première pièce 2a en butée), supérieur au seuil intermédiaire (et typiquement entre 2 et 3 fois le seuil intermédiaire), à une position d'avancement du robot 1a dans un intervalle prédéterminé. Si l'effort monte trop tôt dans le déplacement : la deuxième pièce 2b est trop longue / l'alésage trop court ou la première pièce 2a trop serrée. Si l'effort monte trop tard, la deuxième pièce 2b est trop courte / l'alésage trop long.

Mathématiquement :

- Pour le critère 1, entre $x_c$ la position de contact et $x_g$ une position prédéfinie de fin de glissement (qui peut être l'éventuelle position de dépose évoquée avant) :
$\exists x \in [x_c, x_g]$, *EffortSubi(x)* $\geq$ *SeuilEffortMin,* et $\forall x \in$

$$[x_c, x_g], EffortSubi(x) < SeuilEffortIntermédiaire$$

- Pour le critère 2, avec $[x_{min}, x_{max}]$ l'intervalle prédéfini de fin d'assemblage au-delà de $x_g$ la position prédéfinie de fin de glissement :
$\forall x \in [x_g, x_{min}]$, *EffortSubi(x)* < *SeuilEffortMax* et $\exists x \in$

$$[x_{min}, x_{max}], EffortSubi(x) = SeuilEffortMax$$

En termes numériques, si le seuil de sécurité est 30N, on peut par exemple prévoir 1000N pour le seuil minimal, 3000N pour le seuil intermédiaire et 7500N pour le seuil maximal.

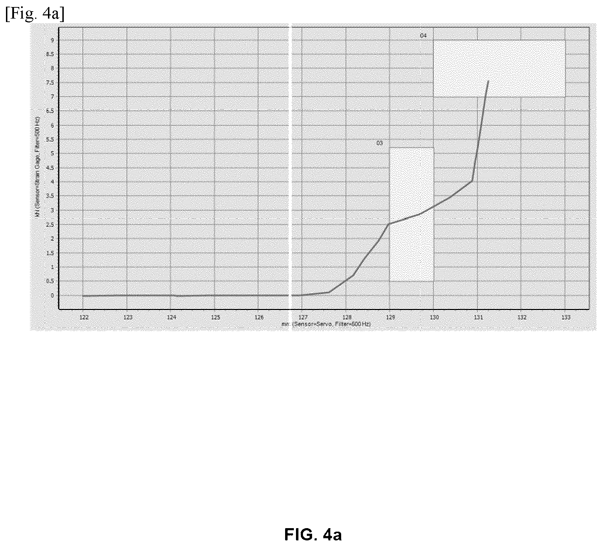

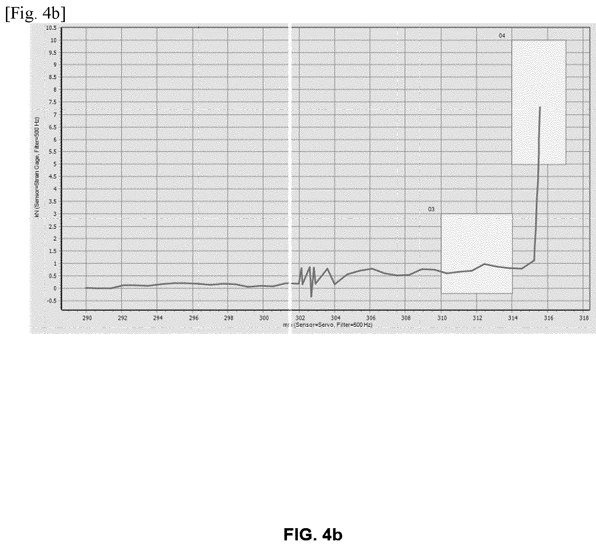

Les **figures 4a et 4b** représentent deux exemples d'effort subi en fonction de la côte d'emmanchement, respectivement dans un cas d'emmanchement correct et d'emmanchement incorrect. Les cotes sont arbitrairement définies, de sorte qu'elles ne correspondent pas dans les deux figures.

Dans la figure 4a, la position de début d'emmanchement correspond à la côte à 127 mm, et on voit la montée de l'effort jusqu'à 2500N à la côte 129 mm (fin du glissement). Le « point anguleux » constaté correspond au passage à la surface d'appui 13a. Ensuite, l'effort continue de monter jusqu'à 7500N à une côte entre 131 et 132mm attendue. L'assemblage est correct : la pièce 2a+2b va tenir et elle est acceptée

Dans la figure 4b, la position de début d'emmanchement correspond à la côte à 302 mm, mais on ne voit pas de montée de l'effort. Entre 302 et 304 mm on a des secousses qui traduisent un contact mais pas de glissement propre : l'axe touche le bord de l'alésage mais celui-ci est trop grand. On atteint 1000N seulement à la cote 312 mm, puis brutalement le seuil 7500N un peu avant 316 mm. La pièce 2a+2b ne va pas tenir et doit être rejetée.

Dans des étapes (f) et (g) finales optionnelles (la pièce assemblée pourrait simplement être laissée tombée par le deuxième robot 2b, ou récupérée par un opérateur), les moyens de traitement 4 déterminent une troisième trajectoire du premier troisième robot 1a permettant de déposer la pièce assemblée 2a+2b jusqu'à un autre contenant selon le résultat de la vérification de l'étape (e) : dans notre cas, le troisième contenant 3c si la vérification est positive (assemblage correct), le quatrième contenant 3d sinon (assemblage incorrect) ; et enfin commandent le premier robot 1a de sorte à mettre en œuvre ladite troisième trajectoire.

Comme expliqué, dans le cas d'un emmanchement incorrect, on peut avoir une notification transmise à l'interface 6, éventuellement avec une indication de l'erreur :

E- : effort trop bas durant l'emmanchement (seuil minimal non atteint)
E+ : effort trop haut durant l'emmanchement (seuil intermédiaire atteint)
D- : Cote d'emmanchement atteinte trop tôt (seuil maximal atteint avant la cote minimale)
D+ : Cote d'emmanchement atteinte trop tard (seuil maximal atteint après la cote minimale)

*Système*

Selon un deuxième aspect, l'invention concerne le système d'assemblage pour la mise en œuvre du procédé selon le premier aspect.

Le système comprend un premier robot 1a muni d'articulations actionnées 12a et d'un organe de préhension 11a, un deuxième robot 1b différent du premier robot 1a et muni un organe de préhension 11b, le cas échéant un troisième robot 1c muni d'articulations actionnées 12c et d'un organe de préhension 11c (qui peut être le premier ou le deuxième robot, ou un robot encore distinct) et des moyens de traitement de données 4 (avantageusement une caméra tridimensionnelle 10, et éventuellement une mémoire 5 et une interface 6).

Les moyens de traitement de données 4 sont configurés pour :

- déterminer une première trajectoire du premier robot 1a permettant de saisir ladite première pièce 2a dans le premier contenant 3a avec l'organe de préhension 11a du premier robot 1a puis de la déplacer jusqu'à l'assembler avec la seconde pièce 2b, lorsque ladite seconde pièce 2b est tenue par l'organe de préhension 11b du deuxième robot 1b dans une position d'attente prédéfinie ;
- Commander le premier robot 1a de sorte à mettre en œuvre ladite trajectoire, en estimant un effort subi par lesdites articulations actionnées 12a du premier robot 2a en fonction de l'avancement de la trajectoire ;
- Vérifier que pendant la trajectoire :

  o Jusqu'à un contact de la première pièce 2a avec la deuxième pièce 2b, l'effort subi est inférieur à un seuil de sécurité ;
  o ensuite, une variation de l'effort subi est conforme à une variation attendue représentative de l'assemblage de la première pièce 2a avec la deuxième pièce 2b.

Les moyens de traitement de données 4 peuvent être en outre configurés pour (en cas de troisième robot 1c et de deuxième pièce 2b disposée en vrac) :

- déterminer une deuxième trajectoire du troisième robot 1c permettant de saisir ladite deuxième pièce 2b dans le deuxième contenant 3b avec l'organe de préhension 11c du troisième robot 1c et de la déplacer jusqu'à ladite position d'attente ;
- Commander le troisième robot 1c de sorte à mettre en œuvre ladite deuxième trajectoire.

Les moyens de traitement de données 4 peuvent même être configurés pour :

- déterminer une troisième trajectoire du premier robot 1a permettant de déposer le résultat de l'assemblage jusqu'à un autre contenant 3c, 3d fonction du résultat de la vérification que pendant la trajectoire, après le contact de la première pièce 2a avec la deuxième pièce 2b, une variation de l'effort subi est conforme à une variation attendue représentative de l'assemblage de la première pièce 2a avec la deuxième pièce 2b ;
- Commande le premier robot 1a de sorte à mettre en œuvre ladite troisième trajectoire.

*Produit programme d'ordinateur*

Selon un troisième et un quatrième aspects, l'invention concerne un produit programme d'ordinateur comprenant des instructions de code pour l'exécution (en particulier sur les moyens de traitement de données 4) d'un procédé selon le premier aspect d'assemblage d'au moins une première pièce 2a avec une deuxième pièce 2b, ainsi que des moyens de stockage lisibles par un équipement informatique (la mémoire 5) sur lequel on trouve ce produit programme d'ordinateur.

**Revendications**

1. Procédé d'assemblage d'au moins une première pièce (2a) avec une deuxième pièce (2b), la première pièce (2a) étant disposée en vrac dans un premier contenant (3a), le procédé étant **caractérisé en ce qu'**il comprend la mise en œuvre par des moyens de traitement de données (4) d'étapes de :

   (c) Détermination d'une première trajectoire d'un premier robot (1a) muni d'articulations actionnées (12a) et d'un organe de préhension (11a), permettant de saisir ladite première pièce (2a) dans le premier contenant (3a) avec l'organe de préhension (11a) du premier robot (1a) puis de la déplacer jusqu'à l'assembler avec la seconde pièce (2b), ladite seconde pièce (2b) étant tenue par un organe de préhension (11b) d'un deuxième robot (1b) différent du premier robot (1a) dans une position d'attente prédéfinie ;
   (d) Commande du premier robot (1a) de sorte à mettre en œuvre ladite trajectoire, en estimant un effort subi par lesdites articulations actionnées (12a) du premier robot (2a) en fonction de l'avancement de la trajectoire ;
   (e) Vérification que pendant la trajectoire :

- Jusqu'à un contact de la première pièce (2a) avec la deuxième pièce (2b), l'effort subi est inférieur à un seuil de sécurité ;
- ensuite, une variation de l'effort subi est conforme à une variation attendue représentative de l'assemblage de la première pièce (2a) avec la deuxième pièce (2b).

2. Procédé selon la revendication 1, dans laquelle la deuxième pièce (2b) est également disposée en vrac dans un deuxième contenant (3b), le procédé comprenant des étapes préalables de :

(a) Détermination d'une deuxième trajectoire d'un troisième robot (1c) muni d'articulations actionnées (12c) et d'un organe de préhension (11c) permettant de saisir ladite deuxième pièce (2b) dans le deuxième contenant (3b) avec l'organe de préhension (11c) du troisième robot (1c) et de la déplacer jusqu'à ladite position d'attente ;
(b) Commande du troisième robot (1c) de sorte à mettre en œuvre ladite deuxième trajectoire.

3. Procédé selon la revendication 2, dans lequel :

- Soit le troisième robot (1c) est le deuxième robot (1b) ;
- Soit le troisième robot (1c) n'est pas le deuxième robot (1b), préférentiellement le premier robot (1a), et l'étape (b) comprend le transfert de ladite deuxième pièce (2b) de l'organe de préhension (11c) du troisième robot (1c) à l'organe de préhension (11b) du deuxième robot (1b).

4. Procédé selon l'une des revendications 1 à 3, dans lequel l'étape (c) comprend la localisation préalable de ladite première pièce (2a) dans le premier contenant (3a) en fonction d'au moins un nuage de points tridimensionnel des pièces disposées en vrac dans le premier contenant (2a), acquis par une caméra stéréoscopique (10).

5. Procédé selon l'une des revendications 1 à 4, dans lequel la première trajectoire du premier robot (1a) comprend successivement :

- Une phase initiale, dans laquelle le premier robot (1a) se déplace d'une position de départ jusqu'à une position de préhension dans laquelle l'organe de préhension (11a) du premier robot (1a) peut saisir la première pièce (2a) ;
- Une phase d'approche, dans laquelle le premier robot (1a) se déplace, en tenant la première pièce (2a), de la position de préhension jusqu'à la position de contact de la première pièce (2a) avec la deuxième pièce (2b) ;
- Une phase d'emmanchement de la première pièce (2a) avec la deuxième pièce (2b).

6. Procédé selon la revendication 5, dans lequel la phase d'emmanchement comprend une première sous-partie de glissement une deuxième sous-partie d'assemblage, l'étape (e) comprenant la vérification que :

- sur la sous-phase de glissement, une montée de l'effort subi est au-delà d'un seuil minimal mais sans atteindre un seuil intermédiaire ;
- Sur la sous-phase d'assemblage, un seuil maximal supérieur au seuil intermédiaire est atteint dans un intervalle prédéterminé de position d'avancement du premier robot (1a).

7. Procédé selon l'une des revendications 5 et 6, dans lequel la phase d'emmanchement comprend une première sous-phase de glissement jusqu'à une position de dépose dans laquelle l'organe de préhension (11a) du premier robot (1a) peut lâcher la première pièce (2a), et une deuxième sous-phase d'assemblage en appliquant sur la première pièce une poussée avec une surface d'appui (13a) du premier robot (1a).

8. Procédé selon l'une des revendications 1 à 7, dans lequel l'étape (e) comprend:

- Si, avant le contact de la première pièce (2a) avec la deuxième pièce (2b), l'effort subi atteint ledit seuil de sécurité, chaque robot (1a, 1b, 1c) est arrêté;
- Si, après le contact de la première pièce (2a) avec la deuxième pièce (2b), la variation de l'effort subi n'est conforme à la variation attendue représentative de l'assemblage de la première pièce (2a) avec la deuxième pièce (2b), le résultat de l'assemblage est rejeté

9. Procédé selon l'une des revendications 1 à 8, comprenant des étapes supplémentaires de :

(f) Détermination d'une troisième trajectoire du premier robot (1a) permettant de déposer le résultat de l'assemblage jusqu'à un autre contenant (3c, 3d) selon le résultat de la vérification de l'étape (e) ;

(g) Commande du premier robot (1a) de sorte à mettre en œuvre ladite troisième trajectoire.

10. Système d'assemblage d'au moins une première pièce (2a) avec une deuxième pièce (2b), la première pièce (2a) étant disposée en vrac dans un premier contenant (3a), comprenant un premier robot (1a) muni d'articulations actionnées (12a) et d'un organe de préhension (11a), un deuxième robot (1b) différent du premier robot (1a) muni un organe de préhension (11b), et des moyens de traitement de données (4) ; **caractérisé en ce que** les moyens de traitement de données (4) sont configurés pour :

- déterminer une première trajectoire du premier robot (1a) permettant de saisir ladite première pièce (2a) dans le premier contenant (3a) avec l'organe de préhension (11a) du premier robot (1a) puis de la déplacer jusqu'à l'assembler avec la seconde pièce (2b), lorsque ladite seconde pièce (2b) est tenue par l'organe de préhension (11b) du deuxième robot (1b) dans une position d'attente prédéfinie ;
- Commander le premier robot (1a) de sorte à mettre en œuvre ladite trajectoire, en estimant un effort subi par lesdites articulations actionnées (12a) du premier robot (2a) en fonction de l'avancement de la trajectoire ;
- Vérifier que pendant la trajectoire :

o Jusqu'à un contact de la première pièce (2a) avec la deuxième pièce (2b), l'effort subi est inférieur à un seuil de sécurité ;
o ensuite, une variation de l'effort subi est conforme à une variation attendue représentative de l'assemblage de la première pièce (2a) avec la deuxième pièce (2b).

11. Système selon la revendication 10, comprenant un troisième robot (1c) muni d'articulations actionnées (12c) et d'un organe de préhension (11c), la deuxième pièce (2b) étant disposée en vrac dans un deuxième contenant (3b) ; les moyens de traitement de données (4) sont configurés pour :

- déterminer une deuxième trajectoire du troisième robot (1c) permettant de saisir ladite deuxième pièce (2b) dans le deuxième contenant (3b) avec l'organe de préhension (11c) du troisième robot (1c) et de la déplacer jusqu'à ladite position d'attente ;
- Commander le troisième robot (1c) de sorte à mettre en œuvre ladite deuxième trajectoire.

12. Produit programme d'ordinateur comprenant des instructions de code pour l'exécution d'un procédé selon l'une des revendications 1 à 9 d'assemblage d'au moins une première pièce (2a) avec une deuxième pièce (2b) dans un système comprenant un premier robot (1a) muni d'articulations actionnées (12a) et d'un organe de préhension (11a), un deuxième robot (1b) différent du premier robot (1a) muni un organe de préhension (11b), lorsque ledit programme est exécuté sur un ordinateur.

13. Moyen de stockage lisible par un équipement informatique sur lequel est enregistré un produit programme d'ordinateur comprenant des instructions de code pour l'exécution d'un procédé selon l'une des revendications 1 à 9 d'assemblage d'au moins une première pièce (2a) avec une deuxième pièce (2b) dans un système comprenant un premier robot (1a) muni d'articulations actionnées (12a) et d'un organe de préhension (11a), un deuxième robot (1b) différent du premier robot (1a) muni un organe de préhension (11b).

## Patentansprüche

1. Verfahren zum Zusammenfügen mindestens eines ersten Teils (2a) mit einem zweiten Teil (2b), wobei das erste Teil (2a) lose in einem ersten Behälter (3a) angeordnet ist, wobei das Verfahren **dadurch gekennzeichnet ist, dass** es die Durchführung folgender Schritte durch Datenverarbeitungsmittel (4) umfasst:

(c) Bestimmung einer ersten Bahn eines ersten Roboters (1a), der mit betätigten Gelenken (12a) und einem Greiforgan (11a) ausgestattet ist, um das erste Teil (2a) im ersten Behälter (3a) mit dem Greiforgan (11a) des ersten Roboters zu greifen (1a) und es dann zu bewegen, bis es mit dem zweiten Teil (2b) zusammengebaut ist, wobei das zweite Teil (2b) von einem Greiforgan (11b) eines zweiten Roboters (1b), der sich vom ersten Roboter (1a) unterscheidet, in einer vordefinierten Warteposition gehalten wird;
(d) Steuerung des ersten Roboters (1a), um die genannte Bahn auszuführen, wobei eine auf die betätigten Gelenke (12a) des ersten Roboters (2a) wirkende Kraft in Abhängigkeit vom Fortschreiten der Bahn geschätzt wird;
(e) Überprüfung, dass während der Bahn:

- bis zum Kontakt des ersten Teils (2a) mit dem zweiten Teil (2b) die aufgenommene Kraft unter einem Sicherheitsgrenzwert liegt;
- danach eine Änderung der Kraft einer erwarteten Änderung entspricht, die für die Montage des ersten Teils (2a) mit dem zweiten Teil (2b) repräsentativ ist.

2. Verfahren nach Anspruch 1, wobei das zweite Teil (2b) ebenfalls lose in einem zweiten Behälter (3b) angeordnet ist, wobei das Verfahren die folgenden vorbereitenden Schritte umfasst:

(a) Bestimmung einer zweiten Bahn eines dritten Roboters (1c), der mit betätigten Gelenken (12c) und einem Greiforgan (11c) ausgestattet ist, mit dem das zweite Teil (2b) im zweiten Behälter (3b) mit dem Greiforgan (11c) des dritten Roboters (1c) ergriffen und in die Warteposition bewegt werden kann;
(b) Steuerung des dritten Roboters (1c), um die zweite Bahn auszuführen.

3. Verfahren nach Anspruch 2, wobei:

- entweder der dritte Roboter (1c) der zweite Roboter (1b) ist;
- entweder der dritte Roboter (1c) nicht der zweite Roboter (1b) ist, vorzugsweise der erste Roboter (1a), und Schritt (b) die Übertragung des zweiten Teils (2b) vom Greiforgan (11c) des dritten Roboters (1c) zum Greiforgan (11b) des zweiten Roboters (1b).

4. Verfahren nach einem der Ansprüche 1 bis 3, wobei der Schritt (c) das vorherige Lokalisieren des ersten Teils (2a) in dem ersten Behälter (3a) auf der Grundlage mindestens einer dreidimensionalen Punktwolke der lose in dem ersten Behälter (2a) angeordneten Teile umfasst, die von einer Stereokamera erfasst wurde (10) erfasst wurde.

5. Verfahren nach einem der Ansprüche 1 bis 4, bei dem die erste Bahn des ersten Roboters (1a) nacheinander umfasst:

- eine Anfangsphase, in der sich der erste Roboter (1a) von einer Startposition zu einer Greifposition bewegt, in der das Greiforgan (11a) des ersten Roboters (1a) das erste Teil (2a) greifen kann;
- Eine Annäherungsphase, in der sich der erste Roboter (1a) mit dem ersten Teil (2a) in der Hand von der Greifposition bis zur Kontaktposition des ersten Teils (2a) mit dem zweiten Teil (2b) bewegt;
- Eine Phase des Zusammenfügens des ersten Teils (2a) mit dem zweiten Teil (2b).

6. Verfahren nach Anspruch 5, wobei die Einsteckphase einen ersten Unterabschnitt des Gleitens und einen zweiten Unterabschnitt des Zusammenfügens umfasst, wobei der Schritt (e) die Überprüfung umfasst, dass:

- in der Gleitunterphase ein Anstieg der ausgeübten Kraft über einen Mindestschwellenwert hinausgeht, jedoch einen Zwischenschwellenwert nicht erreicht;
- in der Montage-Teilphase ein Maximalwert erreicht wird, der über dem Zwischenwert liegt, und zwar innerhalb eines vorbestimmten Intervalls der Fortschrittsposition des ersten Roboters (1a).

7. Verfahren nach einem der Ansprüche 5 und 6, wobei die Einpressphase eine erste Unterphase des Gleitens bis zu einer Ablageposition, in der das Greiforgan (11a) des ersten Roboters (1a) das erste Teil (2a) loslassen kann, und eine zweite Unterphase des Zusammenbaus durch Ausüben eines Drucks auf das erste Teil mit einer Auflagefläche (13a) des ersten Roboters (1a) umfasst.

8. Verfahren nach einem der Ansprüche 1 bis 7, wobei der Schritt (e) umfasst:

- Wenn vor dem Kontakt des ersten Teils (2a) mit dem zweiten Teil (2b) die ausgeübte Kraft den genannten Sicherheitsschwellenwert erreicht, wird jeder Roboter (1a, 1b, 1c) angehalten;
- Wenn nach dem Kontakt des ersten Teils (2a) mit dem zweiten Teil (2b) die Änderung der ausgeübten Kraft nicht der erwarteten Änderung entspricht, die für die Montage des ersten Teils (2a) mit dem zweiten Teil (2b) repräsentativ ist, wird das Ergebnis der Montage abgelehnt.

9. Verfahren nach einem der Ansprüche 1 bis 8, umfassend die folgenden zusätzlichen Schritte:

(f) Bestimmung einer dritten Bahn des ersten Roboters (1a), die es ermöglicht, das Ergebnis der Montage entsprechend dem Ergebnis der Überprüfung in Schritt (e) in einen anderen Behälter (3c, 3d) zu legen;
(g) Steuerung des ersten Roboters (1a), um die dritte Bahn auszuführen.

10. System zum Zusammenbau mindestens eines ersten Teils (2a) mit einem zweiten Teil (2b), wobei das erste Teil (2a) lose in einem ersten Behälter (3a) angeordnet ist, umfassend einen ersten Roboter (1a), der mit betätigten Gelenken (12a) und einem Greiforgan (11a) ausgestattet ist, einen zweiten Roboter (1b), der sich vom ersten Roboter (1a) unterscheidet und mit einem Greiforgan (11b) ausgestattet ist, und Datenverarbeitungsmittel (4) umfasst; **dadurch gekennzeichnet, dass** die Datenverarbeitungsmittel (4) so konfiguriert sind, dass sie:

- eine erste Bahn des ersten Roboters (1a) zu bestimmen, die es ermöglicht, das erste Teil (2a) im ersten Behälter (3a) mit dem Greiforgan (11a) des ersten Roboters zu greifen (1a) zu ermitteln und es dann zu bewegen, um es mit dem zweiten Teil (2b) zusammenzufügen, wenn das zweite Teil (2b) vom Greiforgan (11b) des zweiten Roboters (1b) in einer vordefinierten Warteposition gehalten wird;
- Steuerung des ersten Roboters (1a) so, dass die genannte Bahn ausgeführt wird, wobei die auf die betätigten Gelenke (12a) des ersten Roboters (2a) wirkende Kraft in Abhängigkeit vom Fortschreiten der Bahn geschätzt wird;
- Überprüfen, dass während der Bahn:

o bis zum Kontakt des ersten Teils (2a) mit dem zweiten Teil (2b) die aufgenommene Kraft unter einem Sicherheitsgrenzwert liegt;
o danach eine Änderung der Kraft einer erwarteten Änderung entspricht, die für die Verbindung des ersten Teils (2a) mit dem zweiten Teil (2b) repräsentativ ist.

11. System gemäß Anspruch 10, umfassend einen dritten Roboter (1c), der mit betätigten Gelenken (12c) und einem Greiforgan (11c) ausgestattet ist, wobei das zweite Teil (2b) lose in einem zweiten Behälter (3b) angeordnet ist; die Datenverarbeitungsmittel (4) sind konfiguriert, um:

- eine zweite Bahn des dritten Roboters (1c) zu bestimmen, die es ermöglicht, das zweite Teil (2b) im zweiten Behälter (3b) mit dem Greiforgan (11c) des dritten Roboters (1c) zu greifen und es in die Warteposition zu bewegen;
- den dritten Roboter (1c) so zu steuern, dass er die zweite Bahn ausführt.

12. Computerprogrammprodukt, das Codebefehle zur Ausführung eines Verfahrens gemäß einem der Ansprüche 1 bis 9 zum Zusammenbau mindestens eines ersten Teils (2a) mit einem zweiten Teil (2b) in einem System umfasst, das einen ersten Roboter (1a) mit betätigten Gelenken (12a) und einem Greiforgan (11a) umfasst, einen zweiten Roboter (1b), der sich vom ersten Roboter (1a) unterscheidet und mit einem Greiforgan (11b) ausgestattet ist, wenn das Programm auf einem Computer ausgeführt wird.

13. Von einem Computer lesbares Speichermedium, auf dem ein Computerprogrammprodukt gespeichert ist, das Codebefehle zur Ausführung eines Verfahrens gemäß einem der Ansprüche 1 bis 9 zum Zusammenbau mindestens eines ersten Teils (2a) mit einem zweiten Teil (2b) in einem System umfasst, das einen ersten Roboter (1a) mit betätigten Gelenken (12a) und einem Greiforgan (11a) ausgestattet ist, einen zweiten Roboter (1b), der sich vom ersten Roboter (1a) unterscheidet und mit einem Greiforgan (11b) ausgestattet ist.

**Claims**

1. Method for assembling at least one first part (2a) with a second part (2b), the first part (2a) being disposed in bulk in a first container (3a), the method being **characterised in that** it comprises the implementation by data processing means (4) of the following steps:

(c) Determining a first trajectory of a first robot (1a) equipped with actuated joints (12a) and a gripping member (11a), for grasping said first part (2a) in the first container (3a) with the gripping member (11a) of the first robot (1a) and then moving it until it is assembled with the second part (2b), said second part (2b) being held by a gripping member (11b) of a second robot (1b) different from the first robot (1a) in a predefined waiting position;
(d) Controlling the first robot (1a) so as to perform said trajectory, estimating a force exerted on said actuated joints (12a) of the first robot (2a) as a function of the progress of the trajectory;
(e) Verifying that during the trajectory:

- Until the first part (2a) comes into contact with the second part (2b), the force exerted is below a safety threshold;

- thereafter, a variation in the force exerted is consistent with an expected variation representative of the assembly of the first part (2a) with the second part (2b).

2. Method according to claim 1, in which the second part (2b) is also disposed in bulk in a second container (3b), the method comprising preliminary steps of:

   (a) Determining a second trajectory of a third robot (1c) equipped with actuated joints (12c) and a gripping member (11c) for grasping said second part (2b) in the second container (3b) with the gripping member (11c) of the third robot (1c) and moving it to said waiting position;
   (b) Control of the third robot (1c) so as to perform said second trajectory.

3. Method according to claim 2, wherein:

   - Either the third robot (1c) is the second robot (1b);
   - Either the third robot (1c) is not the second robot (1b), preferably the first robot (1a), and step (b) comprises transferring said second part (2b) from the gripping member (11c) of the third robot (1c) to the gripping member (11b) of the second robot (1b).

4. Method according to one of claims 1 to 3, wherein step (c) comprises the prior location of said first part (2a) in the first container (3a) based on at least one three-dimensional point cloud of the parts arranged in bulk in the first container (2a), acquired by a stereoscopic camera (10).

5. Method according to one of claims 1 to 4, wherein the first trajectory of the first robot (1a) comprises successively:

   - An initial phase, in which the first robot (1a) moves from a starting position to a grasping position in which the gripping member (11a) of the first robot (1a) can grasp the first part (2a);
   - An approach phase, in which the first robot (1a), holding the first part (2a), moves from the grasping position to the position where the first part (2a) comes into contact with the second part (2b);
   - A phase of fitting the first part (2a) to the second part (2b).

6. Method according to claim 5, in which the fitting phase comprises a first sliding sub-phase and a second assembly sub-phase, step (e) comprising verifying that:

   - during the sliding sub-phase, an increase in the force exerted exceeds a minimum threshold but does not reach an intermediate threshold;
   - on the assembly sub-phase, a maximum threshold greater than the intermediate threshold is reached within a predetermined interval of position of progress of the first robot (1a).

7. Method according to one of claims 5 and 6, in which the fitting phase comprises a first sliding sub-phase up to a deposit position in which the gripping member (11a) of the first robot (1a) can release the first part (2a), and a second sub-phase of assembly by applying pressure to the first part with a support surface (13a) of the first robot (1a).

8. Method according to one of claims 1 to 7, wherein step (e) comprises:

   - If, before the first part (2a) comes into contact with the second part (2b), the force exerted reaches the said safety threshold, each robot (1a, 1b, 1c) is stopped;
   - If, after the first part (2a) comes into contact with the second part (2b), the variation in the force exerted does not correspond to the expected variation representative of the assembly of the first part (2a) with the second part (2b), the result of the assembly is rejected.

9. Method according to one of claims 1 to 8, comprising the additional steps of:

   (f) Determining a third trajectory of the first robot (1a) for depositing the assembly result into another container (3c, 3d) according to the result of the verification in step (e);
   (g) Controlling the first robot (1a) so as to performing said third trajectory.

10. System for assembling at least a first part (2a) with a second part (2b), the first part (2a) being loosely arranged in a first container (3a), comprising a first robot (1a) equipped with actuated joints (12a) and a gripping member (11a), a second robot (1b) different from the first robot (1a) equipped with a gripping member (11b), and data processing means (4); **characterised in that** the data processing means (4) are configured to:

- determine a first trajectory of the first robot (1a) for grasping said first part (2a) in the first container (3a) with the gripping member (11a) of the first robot (1a) and then move it until it is assembled with the second part (2b), when said second part (2b) is held by the gripping member (11b) of the second robot (1b) in a predefined waiting position;
- Controlling the first robot (1a) so as to perform said trajectory, estimating a force exerted on said actuated joints (12a) of the first robot (2a) as a function of the progress of the trajectory;
- Verify that during the trajectory:

o Until the first part (2a) comes into contact with the second part (2b), the force exerted is below a safety threshold;
o thereafter, a variation in the force exerted is consistent with an expected variation representative of the assembly of the first part (2a) with the second part (2b).

11. System according to claim 10, comprising a third robot (1c) equipped with actuated joints (12c) and a gripping member (11c), the second part (2b) being disposed in bulk in a second container (3b); the data processing means (4) are configured to:

- determine a second trajectory of the third robot (1c) for grasping said second part (2b) in the second container (3b) with the gripping member (11c) of the third robot (1c) and moving it to said waiting position;
- control the third robot (1c) so as to perform said second trajectory.

12. Computer program product comprising code instructions for executing a method according to one of claims 1 to 9 for assembling at least one first part (2a) with a second part (2b) in a system comprising a first robot (1a) equipped with actuated joints (12a) and a gripping member (11a), a second robot (1b) different from the first robot (1a) equipped with a gripping device (11b), when said programme is executed on a computer.

13. A storage medium readable by computer equipment on which is recorded a computer program product comprising code instructions for executing a method according to one of claims 1 to 9 for assembling at least one first part (2a) with a second part (2b) in a system comprising a first robot (1a) equipped with actuated joints (12a) and a gripping member (11a), a second robot (1b) different from the first robot (1a) equipped with a gripping member (11b).

[Fig. 1]

FIG. 1

[Fig. 2]

(a) Deuxième trajectoire

(b) Commande troisième robot

(c) Première trajectoire

(d) Commande premier robot

(e) Vérification efforts

(f) Troisième trajectoire

(g) Commande premier robot

FIG. 2

[Fig. 3a]

**FIG. 3a**

[Fig. 3b]

FIG. 3b

[Fig. 3c]

**FIG. 3c**

[Fig. 4a]

**FIG. 4a**

[Fig. 4b]

**FIG. 4b**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2204180
- US 2017368648 A, Zuyuan Zhu
- DE 102018003269
- US 2021394367 A